# EUROPÄISCHE PATENTSCHRIFT

(11) **EP 3 027 780 B1**
(45) Veröffentlichungstag und Bekanntmachung des Hinweises auf die Patenterteilung: **03.05.2017**
(21) Anmeldenummer: 14742484.0
(22) Anmeldetag: 17.07.2014
(51) Int. Cl.: C21C 5/52, F27D 3/00, C21C 5/46

(54) **VORRICHTUNG ZUM BELADEN EINES METALLURGISCHEN SCHMELZGEFÄSSES MIT SCHROTT**
DEVICE FOR LOADING A METALLURGICAL MELTING VESSEL WITH SCRAP
DISPOSITIF PERMETTANT DE CHARGER UN CREUSET MÉTALLURGIQUE EN FERRAILLE

(30) Priorität: 29.07.2013 DE 102013214775
(43) Veröffentlichungstag der Anmeldung: 08.06.2016
(73) Patentinhaber: Primetals Technologies Austria GmbH, 4031 Linz (AT)
(72) Erfinder: BAARS, Carsten, 77767 Appenweier-Urloffen (DE); SCHMID, Michael, 77781 Biberach/ Baden (DE)
(74) Vertreter: Metals@Linz
(86) Internationale Anmeldenummer: PCT/EP2014/065389
(87) Internationale Veröffentlichungsnummer: WO 2015/014630

(56) Entgegenhaltungen:
- WO-A1-99/28513
- DE-A1- 1 433 520
- DE-A1-102010 044 984

## Beschreibung

Die Erfindung bezieht sich auf eine Vorrichtung zum Beladen eines metallurgischen Schmelzgefäßes mit Schrott.

Um einen effektiven Betrieb eines metallurgischen Schmelzgefäßes zu ermöglichen, muss dieses nach dem Abstechen der Metallschmelze möglichst schnell und effizient erneut von oben mit Schrott befüllt werden. Hierzu ist es im Stand der Technik bekannt, den in einer Grube gelagerten Schrott in einen Behälter einzufüllen, der auf einem Schrägaufzugwagen schwenkbar gelagert ist und bis zum Rand der Beladeöffnung eines über dem metallurgischen Schmelzgefäß befindlichen Ladeschachtes gefahren werden kann. Dort wird der Behälter mit einer am Schrägaufzugwagen angeordneten hydraulischen Kippvorrichtung geschwenkt, um den Schrott durch die Beladeöffnung in das metallurgische Schmelzgefäß einzufüllen.

Der Erfindung liegt nun die Aufgabe zu Grunde, eine Vorrichtung zum Beladen eines metallurgischen Schmelzgefäßes mit Schrott anzugeben, mit der mit verringertem technischen Aufwand kurze Takt- beziehungsweise Beladezeiten erzielt werden können.

Die genannte Aufgabe wird gemäß der Erfindung gelöst mit einer Vorrichtung mit den Merkmalen des Patentanspruches 1. Gemäß diesen Merkmalen umfasst die Vorrichtung
a) einen Behälter zum Aufnehmen des Schrotts für dessen Transport zu einer Schmelzanlage, der zum Entladen des Schrotts an einer vorderen Stirnseite eine mit einer Klappe verschließbare Entladeöffnung aufweist,
b) ein zu einer Beladeöffnung des Schmelzgefäßes führendes Führungssystem für einen von einer Ausgangsposition in eine Beladeposition im Führungssystem verfahrbar gelagerten Transportschlitten, auf den der Behälter aufsetzbar ist,
c) am Transportschlitten und am Behälter angeordnete, beim Aufsetzen des Behälters ineinander eingreifende starre Haltelemente zum Sichern des aufgesetzten Behälters gegen Verrutschen,
d) eine in einem Schwenklager um eine quer zu einer Längsrichtung des Führungssystems verlaufende Schwenkachse am Führungssystem schwenkbar gelagerte Kippvorrichtung mit zumindest einer Verriegelungseinrichtung zum Herstellen einer lösbaren Formschlussverbindung durch Eingriff in zumindest ein am Behälter angeordnetes Gegenelement.

Durch die Verwendung eines mit Schrott befüllbaren, auf den Transportschlitten aufsetzbaren und dementsprechend vom Transportschlitten entnehmbaren Behälter ist es möglich, eine Mehrzahl von bereits befüllten Behältern bereitzustellen und das Befüllen dieser Behälter und deren Transport zur Beladeöffnung zeitlich zu entkoppeln. Da außerdem die Kippvorrichtung am ortsfesten Führungssystem gelagert und dementsprechend selbst ortsfest ist, und am Transportschlitten ausschließlich zum Sichern des aufgesetzten Behälters gegen Verrutschen vorgesehene starre, d.h. keine beweglichen hydraulisch oder elektrisch zu betätigende Verriegelungselemente enthaltende Haltelemente angeordnet sind, muss dieser nicht mit elektrischer oder hydraulischer Energie versorgt werden, so dass eine aufwendige Zufuhr von Energie und Steuersignalen mit Hilfe von Schlepp- oder Energieketten nicht mehr erforderlich ist.

Darüber hinaus entfällt die Notwendigkeit, den Behälter in einer Grube zu beladen. Durch den Wegfall einer solchen Grube ist auch eine Verkürzung des zur Beladeöffnung führenden Führungssystems, in der Regel ein Schrägaufzug, möglich.

Ebenso entfällt die Notwendigkeit eine Grube zur Aufnahme des Schrotts vorzusehen, da die Behälter bereits auf dem Schrottplatz mit Schrott befüllt werden können und die befüllten Behälter mit Transportfahrzeugen bis zur Schmelzanlage verbracht werden können.

Die zum Kippen des Behälters erforderliche Kraft ist am geringsten, wenn in einer bevorzugten Ausführungsform der Erfindung das Gegenelement an der der Vorderseite gegenüberliegenden Rückseite des Behälters angeordnet ist.

In einer weiteren bevorzugten Ausführungsform der Erfindung bildet das am Transportschlitten angeordnete Halteelement ein Auflager, auf dem eine durch das in einem vorderen Bereich an der Unterseite des Behälters angeordnete Halteelement gebildete und als Gegenlager dienende, eine Kippachse festlegende Achse aufliegt. Auf diese Weise ist ein Kippen des Behälters erleichtert.

Vorzugsweise bilden Auflager und Gegenlager ein Loslager, um mögliche Zwängungen beim Kippen zu vermeiden.

Die Verriegelung des Behälters mit der Kippvorrichtung kann insbesondere dann einfach hergestellt werden, wenn der Behälter an der oberen Kante seiner Rückseite mit zumindest einer als Gegenelement dienenden hohlzylindrischen Aufnahmeöffnung versehen ist, in die ein als Verriegelungselement dienender zylindrischer Bolzen eingeführt werden kann.

In einer weiteren bevorzugten Ausgestaltung der Erfindung ist das Schwenklager an dem der Beladeöffnung zugewandten Ende des Führungssystems angeordnet.

Weitere vorteilhafte Ausgestaltungen der Erfindung sind in den weiteren Unteransprüchen angegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen in einer schematischen Prinzipskizze:
- FIG 1: eine Vorrichtung gemäß der Erfindung in einer Seitenansicht bei verschiedenen Arbeitspositionen,
- FIG 2: eine Detailansicht der Lagerung des Behälters auf dem Transportschlitten,
- FIG 3, 4: die Vorrichtung bei in einer Beladeposition befindlichem Transportschlitten in unterschiedlichen perspektivischen Darstellungen,
- FIG 5, 6: die Vorrichtung in einer Arbeitsposition mit in Beladeposition befindlichem Transportschlitten und zum Entladen des Schrotts in eine gekippte Position verbrachtem Behälter ebenfalls in unterschiedlichen perspektivischen Darstellungen.

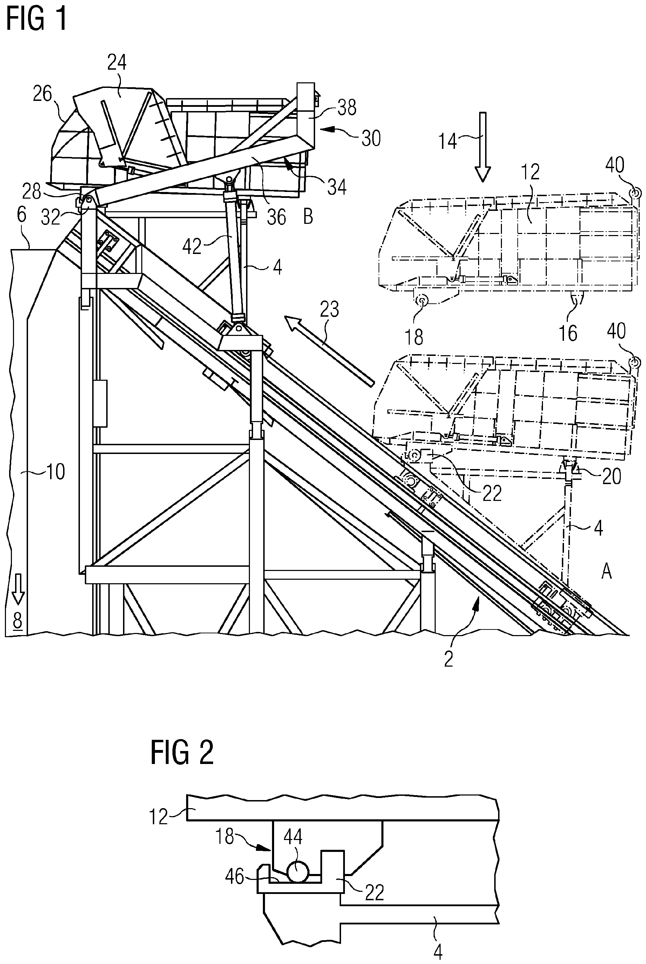

Gemäß FIG 1 umfasst die Vorrichtung ein im Ausführungsbeispiel als Schrägaufzug gestaltetes Führungssystem 2 mit dem ein auf dem Führungssystem 2 verfahrbar gelagerter Transportschlitten 4 zu einer Beladeöffnung 6 eines in einer Halle einer Schmelzanlage befindlichen metallurgischen Schmelzgefäßes 8, von dem in der Figur lediglich der zum eigentlichen Schmelzraum führende Beladeschacht 10 dargestellt ist.

In der Figur sind nun drei unterschiedliche Arbeitspositionen der Vorrichtung dargestellt. Zunächst befindet sich der Transportschlitten 4 in einer Ausgangsposition A. In dieser Ausgangsposition A wird ein mit Schrott befüllter Behälter 12 in Richtung des Pfeils 14 mit einer in der Figur nicht dargestellten Hubeinrichtung auf den auf Schienen des Führungssystems 2 aufgegleisten Transportschlitten 4 abgesetzt. Mit Hilfe von am Transportschlitten 4 und am Behälter 12 jeweils angeordneten, ineinandergreifenden starren Haltelementen 16, 18, 20, 22 ist der auf den Transportschlitten 4 aufgesetzte Behälter 12 in alle horizontalen Richtungen gesichert, so dass er vom Transportschlitten 4 nicht abrutschen kann. Die Haltelemente 16, 18, 20, 22 umfassen dabei keine beweglichen Verriegelungselemente, so dass der Behälter 12 aufgesetzt und abgenommen werden kann, ohne dass hierzu derartige Verriegelungselemente betätigt werden müssen. Neigungswinkel des Führungssystems 2 und Transportschlitten 4 sind so aufeinander abgestimmt, dass der aufgesetzte Behälter 12 eine allenfalls geringe Schräglage aufweist.

Nach dem Aufsetzen des Behälters 12 auf ein eine im Wesentlichen horizontale Auflageebene festlegendes Gestell des Transportschlittens 4 wird dieser in Richtung des Pfeils 23 an das obere Ende des Führungssystems 2 in eine Beladeposition B gezogen. In dieser Beladeposition B ist eine an der Vorderseite des Behälters 12 befindliche und mit einer schwenkbaren Klappe 24 verschließbare Entladeöffnung 26 geöffnet, so dass der im Behälter 12 befindliche Schrott beim Kippen des Behälters 12 um eine in seinem vorderen Bereich befindliche, quer zu einer Längsrichtung des Führungssystems 4 und senkrecht zur Zeichenebene verlaufende Schwenkachse 28 in den Beladeschacht 10 entleert werden kann.

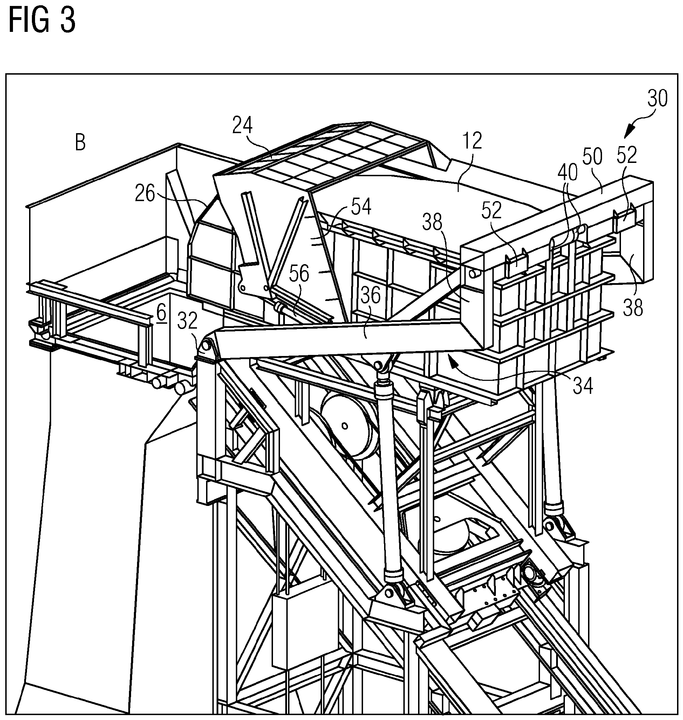

Zum Kippen bzw. Schwenken des Behälters 12 ist eine Kippvorrichtung 30 vorgesehen, die schwenkbar um die Schwenkachse 28 in einem am Führungssystem 2 an dessen der Beladeöffnung 6 zugewandten Ende angeordneten Schwenklager 32 gelagert ist. Die Kippvorrichtung 30 weist zwei seitliche, im Schwenklager 32 gelagerte Schwenkarme 34 auf, zwischen denen sich der Behälter 12 in der Beladeposition B befindet. Die Schwenkarme 34 haben jeweils eine L-Form, deren lange Schenkel 36 im Bereich ihrer freien Enden im Schwenklager 32 gelagert sind, und deren kurze Schenkel 38 an ihren freien Enden mit einem in der Figur nicht sichtbaren senkrecht zur Zeichenebene verlaufenden Querträger (50, FIG 3) miteinander verbunden sind.

Vor dem Schwenken des Behälters 12 wird ein an der Kippvorrichtung 30 befindliches Verriegelungselement zum Herstellen einer Formschlussverbindung in Eingriff mit zumindest einem am Behälter 12 angeordneten Gegenelement 40 gebracht, wenn sich dieser in der Beladeposition B befindet. Das Gegenelement 40 ist dabei an einer Stelle des Behälters 12 angeordnet, im Beispiel an dessen der Vorderseite gegenüberliegenden Rückseite, die bei in der Beladeposition B befindlichem und auf dem Transportschlitten 4 aufliegendem Behälter 12 von der Schwenkachse 28 derart beabstandet angeordnet ist, dass bei Betätigung der Kippvorrichtung 30 eine Kippbewegung des Behälters 12 um eine durch die im vorderen Bereich des Behälters 12 angeordneten, als Lagerelement dienenden unteren Halteelemente 18 festgelegte Kippachse geschwenkt bzw. gekippt werden kann. Zum Betätigen der Kippvorrichtung 30 ist jeder lange Schenkel 36 mit einem am Führungssystem 2 beabstandet vom Schwenklager 32 angeordneten Hubzylinder 42 verbunden.

In FIG 2 ist zu erkennen, dass die an der Unterseite des Behälters 12 in seinem vorderen Bereich angeordneten Halteelemente 18 eine als Gegenlager dienende zylindrische Achse 44 umfassen, die auf einer ebenen Lagerfläche 46 des im Querschnitt annähernd U-förmigen, als Auflager dienendes Haltelementes 22 aufliegen. Die Achse 44 liegt dementsprechend mit einem beidseitigem horizontalen Spiel auf der Lagerfläche 46 auf, so dass die Haltelemente 18, 22 ein Loslager bilden, mit dem bei einer Kippbewegung möglicherweise entstehende Zwängungen verhindert werden können. Um derartige Zwängungen zu reduzieren und ein Abheben des Behälters 12 beim Schwenken der Kippvorrichtung 30 zu vermeiden, sind Schwenkachse 38 und Halteelemente 18, 22 derart angeordnet, dass sich die Schwenkachse 28 bei in der Beladeposition B befindlichem Transportschlitten 4 wenigstens annähernd zwischen den Schenkeln des U-förmigen Halteelementes 22 in oder geringfügig unterhalb bzw. oberhalb der durch die Mittenachse der Achse 44 festgelegten, parallel zur Lagerfläche 46 verlaufenden Ebene befindet.

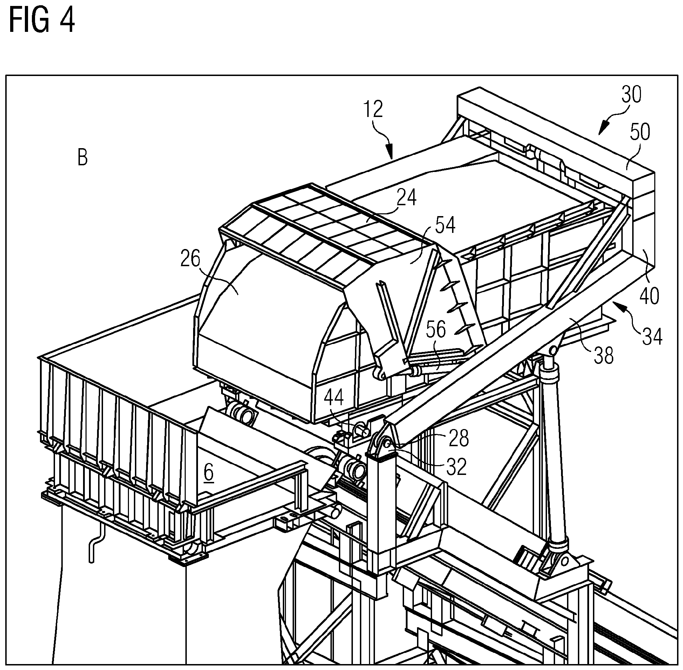

In den perspektivischen Darstellungen gemäß FIG 3 und 4 ist der die kurzen Schenkel 38 der Schwenkarme 34 der Kippvorrichtung 30 miteinander verbindende Querträger 50 zu erkennen. Unterhalb des Querträgers 50 sind zwei Verriegelungseinrichtungen 52 angeordnet, die als Verriegelungselement jeweils einen in Querrichtung hydraulisch verschiebbaren zylindrischen Bolzen enthalten, der in die jeweils als Gegenelement 40 dienenden hohlzylindrischen Aufnahmeöffnungen eingeführt ist und eine lösbare Formschlussverbindung mit dem Behälter 12 herstellt.

FIG 3 und 4 zeigen den Transportschlitten 4 in Beladeposition B mit noch nicht gekipptem Behälter 12. Den FIG 3 und 4 und der FIG 1 ist jedoch zu entnehmen, dass bei in Beladeposition B befindlichem Transportschlitten 4 und noch nicht verkipptem Behälter 12 die Entladeöffnung 26 nicht mehr von der Klappe 24 verschlossen ist. Hierzu ist die Klappe 24 schwenkbar in seitlich am Behälter 12 angeordneten Schwenklagern gelagert, wobei an der Klappe 24 zu beiden Seiten des Behälters 12 Schwenkhebel angeordnet sind, die beim Einfahren des Behälters 12 in die Kippvorrichtung 30 die langen Schenkel 36 der Schwenkarme 38 untergreifen, so dass die Klappe 24 bei weiterem Verfahren des Transportschlittens 4 automatisch von der Entladeöffnung 26 weggeschwenkt wird. Im dargestellten Ausführungsbeispiel weist die Klappe 24 hierzu zwei seitliche Wangen 54 auf. Eine zwischen der Seitenwand des Behälters 12 und den Wangen 54 jeweils in Schwenklagern schwenkbar gelagerte Gasdruckfeder 56 dient zum automatischen Verschließen der Klappe, wenn der entleerte Behälter aus der Beladeposition B zurück in die Ausgangsposition A verfahren wird.

Alternativ zu der in den Figuren dargestellten Ausführungsform, bei der die Klappe 24 automatisch beim Hochfahren geöffnet wird, ist in einer vorteilhaften Variante eine von außen in die Klappe 24 eingreifende externe Hubeinheit vorgesehen. In diesem Fall wird die Klappe 24 erst geöffnet, nachdem der Behälter 12 in die obere Endlage eingefahren ist. Des Weiteren ist auch möglich, die Klappe 24 derart auszulegen und am Behälter 12 anzuordnen, dass sie beim Kippen des Behälters 12 von selbst von der Entladeöffnung wegschwenkt.

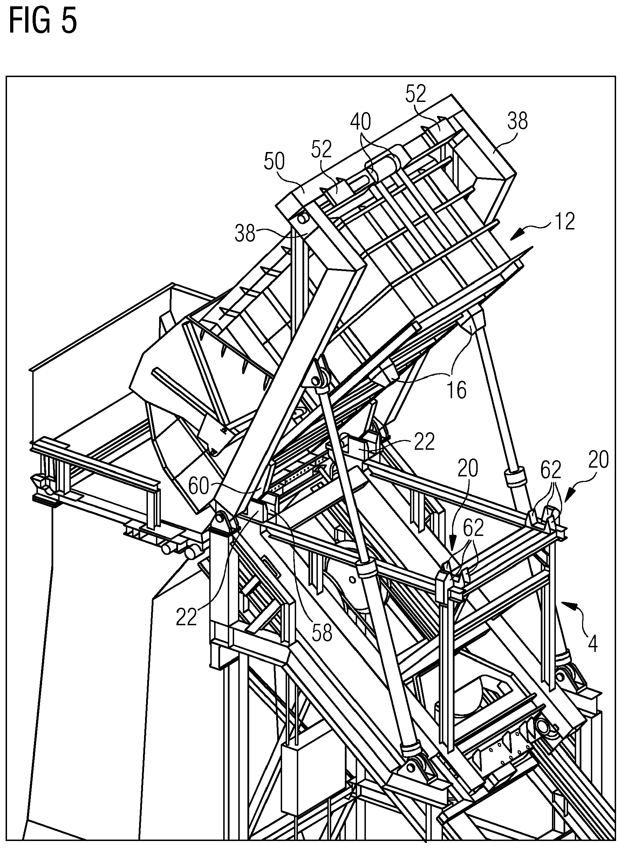

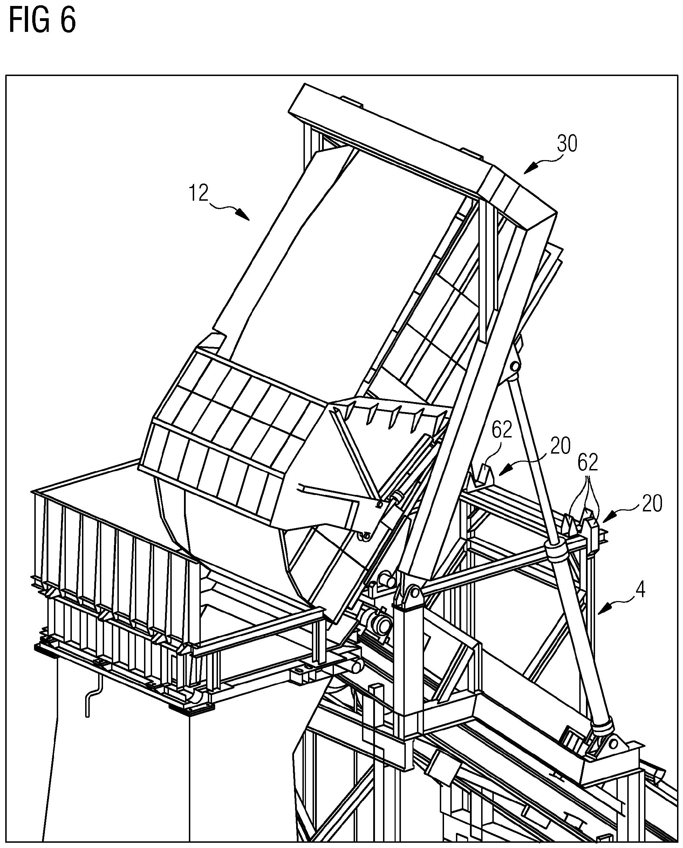

FIG 5 und 6 zeigen jeweils in perspektivischer Darstellung die Vorrichtung in einer Arbeitsposition, in der der Behälter 12 zum Entladen gekippt worden ist. Insbesondere in FIG 6 ist außerdem zu erkennen, dass die Haltelemente 22 eine in Längsrichtung verlaufende und mit einer Einführschräge versehene Nut 58 aufweisen, in die jeweils eine am Behälter angeordnete Kufe 60 bei auf dem Transportschlitten 4 in der Ausgangsposition aufgesetztem Behälter 12 eingreift, so dass ein seitliches Verrutschen verhindert ist. In gleicher Weise greifen die als Sockel gestalteten Haltelemente 16 in eine jeweils durch drei mit Einführschrägen und eine Aufnahme für die Sockel bildenden Zapfen 62 der Halteelemente 20 ein, so dass der Behälter sowohl in Längsrichtung als auch zur Seite hin ebenfalls gegen ein Verrutschen gesichert ist. Weder die als Gegenlager dienenden Halteelemente 16, 18 noch die als Auflager dienenden Haltelemente 20, 22 umfassen bewegliche Teile, so dass der Transportwagen 4 nicht mit elektrischer oder hydraulischer Energie versorgt werden muss.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung zum Beladen eines metallurgischen Schmelzgefäßes (8) mit Schrott, umfassend
a) einen Behälter (12) zum Aufnehmen des Schrotts für dessen Transport zu einer Schmelzanlage, der zum Entladen des Schrotts an einer Vorderseite eine Entladeöffnung (26) aufweist,
b) ein zu einer Beladeöffnung (6) des Schmelzgefäßes (8) führendes Führungssystem (2) für einen von einer Ausgangsposition (A) in eine Beladeposition (B) im Führungssystem (2) verfahrbar gelagerten Transportschlitten (4), auf den der Behälter (12) aufsetzbar ist,
c) am Transportschlitten (4) und am Behälter (12) angeordnete, beim Aufsetzen des Behälters (12) ineinander eingreifende starre Haltelemente (16, 18, 20, 22) zum Sichern des aufgesetzten Behälters (12) gegen Verrutschen,
d) eine in einem Schwenklager (32) um eine quer zu einer Längsrichtung des Führungssystems (4) verlaufende Schwenkachse (28) am Führungssystem (2) schwenkbar gelagerte Kippvorrichtung (30) mit zumindest einer Verriegelungseinrichtung (52) zum Herstellen einer lösbaren Formschlussverbindung durch Eingriff in zumindest ein am Behälter (12) angeordnetes Gegenelement (40).

2. Vorrichtung nach Anspruch 1,
bei der das Gegenelement an der der Vorderseite gegenüberliegenden Rückseite des Behälters angeordnet ist.

3. Vorrichtung nach Anspruch 1 oder 2,
bei der das am Transportschlitten angeordnete Halteelement ein Auflager bildet, auf dem eine durch das in einem vorderen Bereich an der Unterseite des Behälters angeordnete Halteelement gebildete und als Gegenlager dienende, eine Kippachse festlegende Achse aufliegt.

4. Vorrichtung nach Anspruch 3,
bei der Auflager und Gegenlager ein Loslager bilden.

5. Vorrichtung nach einem der vorhergehenden Ansprüche,
bei der der Behälter an der oberen Kante seiner Rückseite mit zumindest einer als Gegenelement dienenden hohlzylindrischen Aufnahmeöffnung versehen ist, in die ein als Verriegelungselement dienender zylindrischer Bolzen einführbar ist.

6. Vorrichtung nach einem der vorhergehenden Ansprüche,
bei der das Schwenklager an dem der Beladeöffnung zugewandten Ende des Führungssystems angeordnet ist.

7. Vorrichtung nach einem der vorhergehenden Ansprüche,
bei der die Kippvorrichtung zwei seitliche, im Schwenklager schwenkbar gelagerte Schwenkarme umfasst, die durch einen Querträger miteinander verbunden sind.

8. Vorrichtung nach Anspruch 7,
bei der die Schwenkarme eine L-Form aufweisen, deren lange Schenkel im Bereich ihrer freien Enden im Schwenklager gelagert sind, und deren kurze Schenkel an ihren freien Enden mit dem Querträger miteinander verbunden sind.

9. Vorrichtung nach Anspruch 8,
bei der der Behälters eine Klappe zum Verschließen der Entladeöffnung aufweist, die in seitlich am Behälter angeordneten Schwenklagern gelagert ist.

10. Vorrichtung nach einem der vorhergehenden Ansprüche,
bei der Führungssystem und Transportschlitten einen Schrägaufzug bilden.

## Claims

1. Device for loading a metallurgical melting vessel (8) with scrap, comprising
a) a container (12) for receiving the scrap for transport to a melting plant, which has a discharge opening (26) on a front side for discharging the scrap,
b) a feed system (2), leading to a charging opening (6) of the melting vessel (8), for a transport sled (4) which is mounted so as to be displaceable from a starting position (A) to a charging position (B) in the feed system (2), and on which the container (12) can be placed.
c) rigid retaining elements (16, 18, 20, 22), which are arranged on the transport sled (4) and on the container (12) and engage in one another on placement of the container (12), in order to prevent the container (12) placed thereon from slipping,
d) a tipping device (30), which is mounted in a pivot bearing (32) on the feed system (2) so as to be able to pivot about a pivot spindle (28) running transversely to a longitudinal direction of the feed system (2), with at least one locking device (52) in order to establish a releasable form-fitting connection by engagement in at least one counter-element (40) arranged on the container (12).

2. Device according to Claim 1,
in which the counter-element is arranged on the rear side, opposite the front side, of the container.

3. Device according to Claim 1 or 2,
in which the holder element arranged on the transport sled forms a support bearing on which rests a spindle that secures a tipping spindle, is formed by the holder element and serves as a mating bearing, the holder element being arranged in a forward region on the underside of the container.

4. Device according to Claim 3,
in which the support bearing and the mating bearing form a floating bearing.

5. Device according to one of the preceding claims,
in which the container is provided, on the upper edge of its rear side, with at least one hollow-cylindrical receiving opening, which serves as a counter-element and into which can be inserted a cylindrical bolt serving as a locking element.

6. Device according to one of the preceding claims,
in which the pivot bearing is arranged at that end of the feed system oriented towards the charging opening.

7. Device according to one of the preceding claims,
in which the tipping device comprises two lateral pivot arms that are mounted pivotably in the pivot bearing and are connected to one another by a crossbeam.

8. Device according to Claim 7,
in which the pivot arms are L-shaped, with their long legs mounted in the pivot bearing in the region of their free ends, and with their short legs connected to one another with the crossbeam at their free ends.

9. Device according to Claim 8,
in which the container has a flap for closing the discharge opening, which is mounted in pivot bearings mounted laterally on the container.

10. Device according to one of the preceding claims,
in which the feed system and the transport sled form an inclined lift.

## Revendications

1. Dispositif permettant de charger un creuset métallurgique (8) avec de la ferraille, comprenant
a) un conteneur (12) destiné à recevoir la ferraille en vue de son transport vers une installation de fusion, qui présente une ouverture de chargement (26) au niveau d'une face antérieure en vue du chargement de la ferraille,
b) un système de guidage (2), guidant vers une ouverture de chargement (6) du creuset (8), pour un chariot de transport (4) monté déplaçable au sein du système de guidage (2) d'une position initiale (A) jusqu'à une position de chargement (B), sur lequel est posé le conteneur (12),
c) des éléments de retenue (16, 18, 20, 22) rigides venant en prise les uns avec les autres lors du placement du conteneur (12), agencés sur le chariot de transport (4) et sur le conteneur (12) afin de protéger le conteneur (12) posé contre le glissement,
d) un dispositif de culbutage (30) monté pivotant sur le système de guidage (2) autour d'un axe de pivotement (28) perpendiculaire à une direction longitudinale du système de guidage (4) au sein d'un palier orientable (32), avec au moins un dispositif du verrouillage (52) destiné à produire une liaison par complémentarité de forme, débrayable, par mise en prise dans au moins un contre-élément (40) agencé sur le conteneur (12).

2. Appareil selon la revendication 1,
dans lequel le contre-élément est agencé au niveau de la face arrière opposée à la face avant du conteneur.

3. Appareil selon la revendication 1 ou 2,
dans lequel l'élément de retenue agencé sur le chariot de transport constitue un appui sur lequel repose un axe définissant un axe de culbutage, formé par l'élément de retenue agencé dans une région antérieure au niveau de la face inférieure du conteneur et servant de contre-palier.

4. Appareil selon la revendication 3,
dans lequel le palier et le contre-palier forment un palier libre.

5. Appareil selon l'une quelconque des revendications précédentes, dans lequel le conteneur est muni, au niveau du bord supérieur de sa face arrière, d'au moins une ouverture de réception cylindrique creuse servant de contre-élément, au sein de laquelle est introduit une cheville cylindrique servant d'élément de verrouillage.

6. Appareil selon l'une quelconque des revendications précédentes, dans lequel le palier orientable est agencé au niveau de l'extrémité, tournée vers l'ouverture de chargement, du système de guidage.

7. Appareil selon l'une quelconque des revendications précédentes, dans lequel le dispositif de culbutage comprend deux bras pivotants latéraux montés pivotants au sein du palier orientable, lesdits bras étant reliés l'un à l'autre par une traverse.

8. Appareil selon la revendication 7,
dans lequel les bras pivotants présentent une forme de L, dont les branches longues sont montées au sein du palier orientable dans la région de leurs extrémités libres, et dont les branches courtes sont reliées l'une à l'autre par la traverse au niveau de leurs extrémités libres.

9. Appareil selon la revendication 8,
dans lequel le conteneur présente un toit permettant de fermer l'ouverture de chargement, ledit toit étant monté au sein de paliers orientables agencés latéralement au niveau du conteneur.

10. Appareil selon l'une quelconque des revendications précédentes, dans lequel le système de guidage et le chariot de transport forment un élévateur à plan incliné.
